# EUROPEAN PATENT APPLICATION

(11) **EP 4 286 214 A1**
(43) Date of publication of application: **06.12.2023**
(21) Application number: 22382525.8
(22) Date of filing: 31.05.2022
(51) Int. Cl.: B60L 58/16, G01R 31/36

(54) **RECONDITIONING OF VEHICLE BATTERIES**

(71) Applicant: Obdfuture Diag & Keys, SL, 28006 Madrid (ES)
(72) Inventor: COLANGELO MARIANO, Enzo Adrian, 08013 BARCELONA (ES)
(74) Representative: ZBM Patents - Zea, Barlocci & Markvardsen

(57) **Abstract**

System and method of determining the reconditioning process for a vehicle battery, wherein a battery identification parameter and at least two parameters related to real battery operation of the vehicle battery are received, and a comparison is performed between a correlation between the two real operation parameter values and the correlation between two reference operation parameter values. Based on such comparison, a determination of a reconditioning process of the battery module may be performed.

## Description

The present disclosure relates to methods and systems for determining a reconditioning process for vehicle batteries.

### BACKGROUND

Battery diagnostic systems have been widely used for the monitoring of energy storage batteries, and more specifically, batteries used in the automobile industry. When testing a vehicle battery, an operator usually connects a diagnostic apparatus and checks several characteristics of the battery. This way, the operator, based on his knowledge about a generically correct operation of a vehicle battery, may assess if any malfunction is found therein, to determine the replacement of part or all of the battery.

However, each model of battery may respond differently under different situations, thus rendering the operator's assessment inaccurate, leading, in many cases, to many misjudgments on whether a part of a battery may be malfunctioning. Furthermore, even if manufacturers specifications are to be found about a certain battery model, by the time the battery has been installed within a car, such specifications may not be accurate due to variations of the battery (for example, the car being stored in a humid environment for a long period of time before being purchased, or changes in temperature along the manufacturing line of the car, etc.).

Therefore, accurate methods to determine a malfunction and further reconditioning of a vehicle battery are needed.

### SUMMARY

According to a first aspect of the present disclosure, a method of determining a reconditioning process for a vehicle battery is provided. The vehicle battery may comprise at least one battery module. The method may comprise:
- Receiving or obtaining a battery identification parameter value and at least two real operation parameter values from a battery diagnostics system, the real operation parameter values being related to:
   - the real operation of the vehicle battery; and/or
   - the real operation of at least one battery module of the vehicle battery;
- Receiving or obtaining, from a repository, the values of reference operation parameters corresponding to the two real operation parameter values and to the battery identification parameter value;
- Obtaining the correlation between the two real operation parameter values and a correlation between the reference operation parameter values;
   - If the correlation between the two real operation parameter values is outside a tolerance range of the correlation between the reference operation parameter values:
      ∘ Determining a reconditioning process of the vehicle battery.

More specifically, a step of receiving a battery identification parameter value and at least two parameter values related to the real battery operation of a vehicle battery is performed. The battery identification parameter value may be, for example, the model of the battery for which the reconditioning process is determined. Alternatively, the battery identification parameter value may also comprise an image (for example, a photograph) of the battery. This way, an image recognition algorithm may recognize the model of the battery by processing the image of the battery. Also, the parameter values related to the real battery operation may be, for example, related to an electrical feature of one or more battery modules of the battery. For example, they may be the output voltage of one or more battery modules of the battery, the electrical resistance of one or more battery modules of the battery, or the SoC (State of Charge) of one or more battery modules of the battery, or SoC of the whole battery (which corresponds to the sum of the charge of the different modules that compose it). Furthermore, another possible parameter value may be the temperature of one or more battery modules of the battery.

This way, the two parameter values may be any two of the above (for example, temperature of a battery module, and the output voltage of said battery module whilst having said temperature), or, alternatively, a first parameter may be one of the above and a second parameter may be a time related parameter. value More precisely, for example, the two parameter values may be defined as a variation of an electrical or temperature parameter related to battery operation of the vehicle battery over a predetermined period of time.

Said parameters may be received from a battery diagnosis system. Such system may be, for example, a system that can obtain a set of parameter values related to the real battery operation, being external to the battery or being embedded therein. More specifically, an example of a battery diagnosis system to determine battery failures could be the Autel 508 model (Germany), such systems being widely known in the state of the art. Such systems can give to the user real-time data of, for example, operating parameters of a vehicle battery, such as temperature of one or more battery modules, output voltage of one or more battery modules, electrical resistance of one or more battery modules, and SoC of the entire battery, either occasionally (for example, on demand), or automatically over a period of time.

Afterwards, receiving or obtaining, from a repository (e.g. a mapping repository), the values of reference operation parameters corresponding to the two real operation parameter values and to the battery identification parameter value may be performed. The mapping may be between battery identification parameters and reference conditions of correct battery operation of a plurality of vehicle batteries.

More specifically, the repository may comprise, for a plurality of batteries (each identified by a battery identification parameter, such as, for example, the model of the battery), a set of reference conditions of correct battery operation (i.e. the values of reference operation parameters), which may be conditions previously verified in, for example, a laboratory, by means of operation tests on a set of predetermined batteries (for example, car batteries being monitored while the car is running in different situations). This way, a set of reference conditions of correct battery operations (bench tested in vehicles under different operation conditions) are used to represent the operation of batteries in different situations, which may differ from the operation specified by the manufacturer of the battery in said situations. For example, the battery manufacturer may specify that the battery (in new condition) has a certain curve of temperature of a battery module related to the output voltage of the battery module. However, for example, batteries may lay stored in warehouses being unused for a period of time before being mounted in cars, and when a new car finally reaches its owner, such specifications may not be valid anymore. Therefore, the reference conditions stored in the repository may represent more accurately the different states of each tested battery.

According to some examples, a reference condition (understood as reference operation parameter values) of correct battery operation may be a variation of a first parameter related to battery operation in relation to a second parameter related to battery operation. For example, a reference condition may be defined by a set of values of the temperature of one module of the battery, related to the output voltage of the same module of the battery. In a similar way, other combinations of different parameters may be implemented to define different reference conditions.

In some examples, a reference condition of correct battery operation may also be a variation of a parameter related to battery operation of the vehicle battery over a predetermined period of time.

Therefore, such reference conditions may be in the form of, for example, battery behavior two-dimensional curves. Such curves may map a first operating parameter over a second operating parameter, or an operating parameter over time.

Furthermore, at least one reference condition corresponding to the received battery identification parameter value may be obtained from the repository. For example, the repository may be found in the cloud (in a server connected to the system through Wi-Fi, for example), and a set of reference conditions may be retrieved which correspond to a battery of the same model as the battery to be reconditioned (identified by its battery identification parameter). As a result, as previously explained, such reference conditions may be more accurate than the manufacturer's specifications corresponding to the same battery model.

Afterwards, a verification or comparation may be performed of whether the correlation between the values of the two received parameter values related to the real battery operation complies with the obtained reference condition. The values of the two received parameters related to the real battery operation may have a correlation of value to value (for example, the parameters being temperature and voltage, wherein for a single value of temperature of a battery module, a corresponding output voltage of the battery module exists), or value of a first parameter over time (for example, over a period of 10 seconds after battery start-up, the temperature of a battery module may vary over time in a certain way). Such correlation may be compared with a correlation associated to the reference condition, in such a way that it may be the same or different. For example, when the parameters are temperature and voltage, the correlation between the two being a specific temperature of the battery module corresponding to a specific output voltage of the battery module, the reference condition may be, for the same specific temperature of the battery module, a lower output voltage of the battery module, thus resulting in the reference condition not complying with the correlation of the two parameters. Such compliances may be accepted for a degree of deviation of the values, that is, if the correlation between the two real operation parameter values is outside or not a tolerance range of the correlation between the reference operation parameter values. That is, for two parameters (for example, temperature and output voltage), given their correlation, the reference condition may be defined by the same parameters (two reference parameters, which are temperature and output voltage), wherein for a first reference parameter having a value close to the first parameter (within an accepted deviation), the second reference parameter may have a value close to the second parameter (within an accepted deviation). In this case, the verification would be positive, since the correlation between the two parameters may comply with the reference condition with an accepted deviation or tolerance range.

Furthermore, if said correlation between the values of the two received parameters related to the real battery operation does not comply with the obtained reference condition, a determination of a reconditioning process of the battery module may be performed.

In some examples, the tolerance range may be between ±10%. In fact, the tolerance range may be selected by an expert or a normal user according to different parameters or data, for example, the type or model of the battery, the time of use, the environmental conditions, etc. On the other hand, it is important to note that the lower value and the higher value of the tolerance range may be different, that is, for example, the higher value may be 15% and the lower value may be -5%, or the higher value may be 12% and the lower value may be -7%, and go on. Finally, one or both values of the tolerance range may be 0%.

Thus, by performing the previously described method according to the present disclosure, a reconditioning process of a vehicle battery may be determined based on the type of battery and reference conditions of correct battery operation of the specific battery. Furthermore, the determination of the reconditioning process may be performed taking into account the operation of the battery module, modules or the whole battery, compared to reference conditions which correspond to operation parameters of the same model or type of battery (or battery module). Such operation may have been determined by bench testing at least one battery module or battery of the same type, under the same operating conditions (using the same at least two parameters related to battery operation), thus being closer to the real response of the battery or battery modules (in comparison with the manufacturers specifications, which may not be accurate enough).

Furthermore, by checking if a battery meets the reference conditions retrieved from the repository (for example, a database), by means of the values of parameters related to its operation (being the parameters obtained from a battery diagnosis system, either entered manually to the controller of the system for reconditioning batteries, or by means of the connection of the diagnosis system to the controller), a better assessment of the reconditioning of the battery may be performed.

Furthermore, if the relationship between the real-time battery operating parameters of a module of a battery does not meet the reference condition of correct battery operation corresponding to the same module, a malfunction of a specific module may be more precisely identified. Then, once one or more modules are identified as defective (or malfunctioning), the system can also determine the percentage of deterioration of the module in a more precise way, so that it can be subsequently modified to return it to its nominal state. On the other hand, it can also determine if the module is damaged beyond repair and identify the module as a module to be replaced. This way, it is possible to identify malfunctioning modules, in order to fix them or substitute them, thus reducing the cost of fixing or replacing the whole battery.

Then, according to some examples, the verification of the compliance between correlations may be performed by verifying if the "real" correlation is within a predetermined range of values near the value of the reference condition.

In some examples, the reconditioning process may comprise:
- Verifying the electrical operation of the vehicle battery contactors;
- Lowering the electrical charge of all modules of the vehicle battery to a predetermined minimum battery charge value;
- Charging the battery to a predetermined charge value.

By performing said steps of the reconditioning process, a substantial homogeneous cleaning of the electrodes of the modules of the vehicle battery is achieved. Furthermore, the charging of the battery to a predetermined charge value ensures that all modules work and will be charged equally and that there is no imbalance in the battery capacity (trying to avoid a situation wherein a module works more than others, thus deteriorating faster in the future).

For example, the charging of the battery may be performed up to a predetermined charge value, which may be a verified optimum charge value, related, for example, to the battery reference conditions obtained.

When charging all the modules of the battery, this can be performed at slow charging speed. In general, any battery has a nominal charging speed parameter C. In normal operation, batteries are charged and discharged at rate values multiples of C. Also, in normal operation, the battery charge and discharge rates should be similar. Otherwise, there may be a problem in one or more battery modules. In the case of a battery reconditioning process, the slow charge rate may be, for example, a fraction of the nominal battery charge rate.

Furthermore, according to some examples, the method may comprise reconditioning the battery. This step may comprise:
- Obtaining at least two reconditioning parameters, from data related to the performance of the charging of the battery to the predetermined charge value;
- Determining at least one defective module, based on the verification of whether the correlation between the values of the two reconditioning parameters complies with the obtained reference condition.

Thus, battery performance may be monitored by obtaining at least two reconditioning parameters, obtained in parallel with battery charging, for at least one battery module. These parameters describe how the battery behaves during the charging process. If during charging the behavior of the battery module does not comply with the reference conditions of correct battery operation (i.e., if the relationship between the values of the two reconditioning parameters does not meet these conditions), it may be determined that the module is not working properly. If this is done for several battery modules, the system may report the percentage of battery modules that are defective. The reconditioning parameters may be the same as the operating parameters previously obtained from the battery, or different ones. For example, the reconditioning parameters may be the charging rate of the battery, or the charging rate of the battery over time.

Furthermore, according to some examples, lowering the electrical charge of all modules of the battery may comprise storing at least part of the electrical charge extracted from the modules of the battery in an electrical accumulator device. Such accumulator may be, for example, a plurality of batteries connected in series, working as an accumulator, to avoid throwing away the energy stored in the battery. Then, after the lowering the electrical charge, the modules may be recharged with the energy they already had before the reconditioning process, plus any extra energy needed to charge the battery to its optimum state. Such accumulators may be similar to the ones used in solar panel energy systems, wherein the electricity generated by the solar panels may be stored in accumulators for its use in the future.

Also, in some examples, the charging of the battery to a predetermined charge value may be performed using the charge stored within the electrical accumulator device.

By lowering the charge of all modules to the predetermined minimum battery charge value, some or all of the discharged energy can be stored in an accumulator (a separate element within the reconditioning system). Subsequently, when charging the battery to a predetermined charge value, calculated for all modules, the energy stored in the accumulator can be used, or external energy can be used, or a combination of both. Thus, when reconditioning the battery, the total or partial loss of energy previously found in one or more modules can be avoided.

In addition, the system can also make a recommendation (to repair or replace one or more particular battery modules) so that ultimately the user (which may be the technician overlooking the possible reconditioning of the vehicle battery, or the owner of the vehicle comprising the battery) may decide on the future of the battery. Thus, the user can decide to replace the specific module(s) or discard the entire battery.

Indicators for a module to be determined as defective can be, for example, that the charge increase is not substantially similar in all modules. More specifically, that the module that had the minimum charge does not charge and, in addition, its temperature rises. This could typically indicate that the battery module is not working properly and should be replaced due to, for example, internal physical deterioration of the module.

According to another aspect of the disclosure, a system for determining the reconditioning process for a vehicle battery is provided. The system may comprise:
- A repository storing battery identification parameters related to the values of reference operation parameters according to the correct battery operation of a plurality of vehicle batteries;
- A controller configured to:
   - Receive or obtain a battery identification parameter value and at least two real operation parameter values from a battery diagnostics system, the battery operation parameter values being related to:
      ∘ the real operation of the vehicle battery; and/or
      ∘ the real operation of at least one battery module of the vehicle battery;
   - Receive or obtain, from a repository, the values of reference operation parameters corresponding to the two real operation parameter values and to the battery identification parameter value;
   - Obtain the correlation between the two real operation parameter values and a correlation between the reference operation parameter values;
   - If the correlation between the two real operation parameter values are outside a tolerance range of the correlation between the reference operation parameter values:
      ∘ Determine a reconditioning process of the vehicle battery.

### BRIEF DESCRIPTION OF THE DRAWINGS

Non-limiting examples of the present disclosure will be described in the following, with reference to the appended drawings, in which:
Figure 1 depicts an example of a system for determining the reconditioning process of a vehicle battery according to the present disclosure.
Figures 2A and 2B depict two different views of an example of the analyzer, according to the present disclosure.
Figure 3 depicts a first flowchart according to an example of a method for determining the reconditioning process of a vehicle battery according to the present disclosure.
Figure 4 depicts a second flowchart according to an example of a method for determining the reconditioning process of a vehicle battery according to the present disclosure.
Figure 5 depicts an example of a bench with a system for determining the reconditioning process of a vehicle battery according to the present disclosure mounted therein.

### DETAILED DESCRIPTION OF EXAMPLES

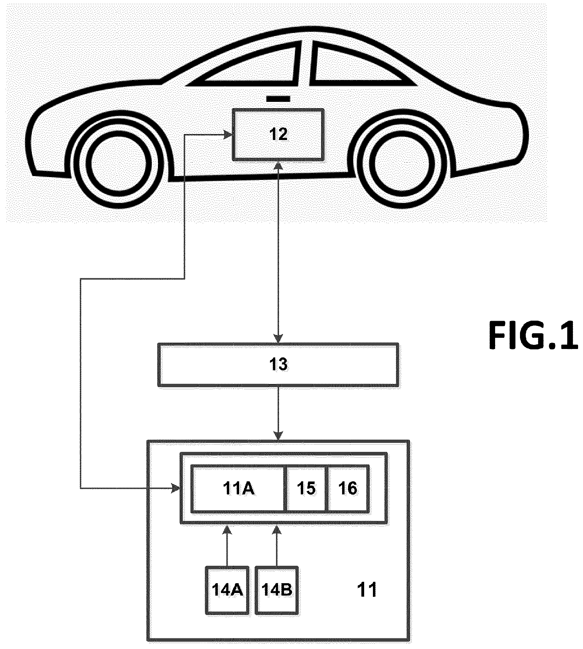

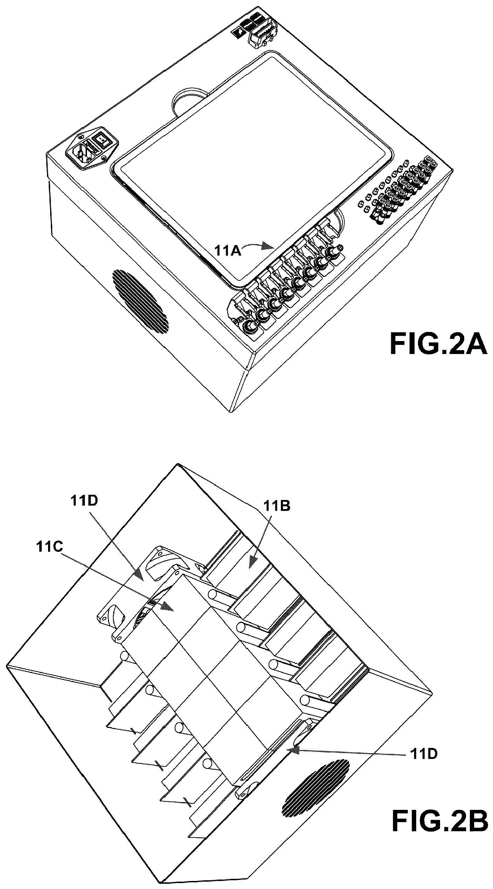

In the following, examples of methods and systems for determining the reconditioning process for a vehicle battery are provided. More precisely, as seen in figure 1, a system may be embodied in an analyzer device 11 of lead-acid, lithium-ion, polymer, and metal-nickel and nickel-chromium hydride battery modules and/or packs. In this example, as seen in figures 2A and 2B, the analyzer 11 comprises eight channels 11A in order to recondition up to eight modules of a battery in parallel, each channel comprising a board 11B which manages each module separately, and an outer standardized terminal. Also, each board of each channel comprises a heat sink 11C to cool the components of each board, and the analyzer comprises two fans 11D to dissipate internal heat already accumulated by the heat sink, out of the analyzer's box.

Furthermore, the analyzer 11 comprises a set of adapters for connecting each type of battery to the channels 11A, by adapting the standardized terminals to each different connector of different battery models. Therefore, each channel is connected to each module of the battery using connectors and the corresponding adapter based on the type of battery, each connector comprising two wires (one cable for each positive and negative terminal of the module).

As seen in figure 1, when in use, the analyzer 11 is connected to the battery 12, and the battery connectors are also connected to a diagnosis system 13, which is also connected back to the analyzer 11. By means of these connections, the analyzer may be able to analyze the behaviour of the battery and determine if a reconditioning process is needed, and how the process has to be performed. The battery 12 may be, for example, a lead-acid, lithium-ion, polymer, nickel-metal hydride, or nickel-chromium battery.

More specifically, as seen in figure 1, the analyzer device 11 may comprise a first controller 14A to control the operation of the analyzer, and an integrated temperature monitoring module 15 for monitoring the temperature of each battery module of the battery 12, in order to perform the different charge/discharge phases and the charge stop automatically, only by setting a cut-off temperature. This function allows accurate and safe maintenance of the batteries, and also allows leaving the analyzer unattended while the reconditioning process is performed on the battery.

The analyzer may also comprise a second controller 14B, wherein a software (e.g., a firmware) is run to perform the battery 12 test and further analyzing of the test data. Furthermore, the analyzer 11 may comprise a plurality of channels equipped with a dedicated processor to ensure optimal calculation of optimum charge of the battery (i.e., the maximum possible charge in ideal conditions, the state of charge being a value of charge of the battery which may be up to that optimum charge, and the optimum charge depending on the state of the battery, how it's been used, the different ways in which it has been charged, etc.), timing, voltage and current control. All of the channels may also be isolated from each other so that the cells of the battery pack can be tested individually without any further measurement directly. Also, each of the channels may have independent temperature control, and fan with speed regulator.

The analyzer 11 may also comprise a front-end, including LED lights to indicate the operating status, test status, match status and alarm status of each channel.

Once a reconditioning is determined by the analyzer 11, the software can switch between test phases automatically. Furthermore, charging and discharging parameters can be customized.

Multiple analyzer devices may be stacked to meet the needs of detecting batteries with more than ten modules, so the entire method according to the present disclosure can be performed at once in a battery with more than ten different modules.

Furthermore, all of the performance of the analyzer 11 may be recorded in an internal memory, in order to generate a historical for each tested battery. This may be useful, for example, for determining how many times and in which way the battery has been already reconditioned in the past.

Also, to ensure accurate and safe testing and maintenance of unattended batteries, the cut-off temperature can be set individually for each channel of the analyzer, allowing the change of each step of the method along the working process of the system, and an automatic and "unattended" charging stop. This may be possible by virtue a temperature probe installed in each of the boards which manage each module separately. This way, the temperature of each module can be independently monitored.

The analyzer 11 also may include a communications module 16 managed by the controller 14A and 14B, to connect the analyzer 11 to a web server in order to be able to remotely operate the analyzer, visualize the status of the analyzer and the battery cells and also to be able to download reports generated from the tests carried out by the analyzer. This way, If the analyzer 11 and the web server are close enough, they may be wired (for example, through Ethernet technology) or may be connected through short-range communication technologies, for example, Bluetooth (e.g. BLE - Bluetooth Low Energy), NFC, Zigbee or WiFi technology. If the analyzer 11 and the web server are far away, they may be connected through long-range wireless communication technologies such as GSM, GPRS, 3G, 4G, 5G or satellite technology or wired technologies (for example, through optical fiber, ADSL, etc.).

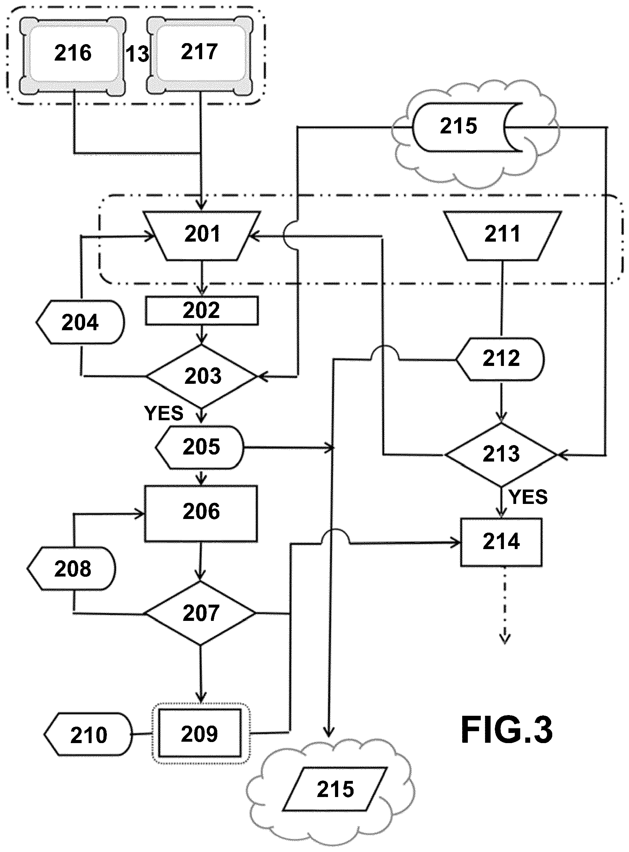

Figure 3 depicts an example of a flow chart of a first part of a method to determine the reconditioning process for a vehicle battery of the present disclosure. More precisely, the analyzer 11 may be connected to a diagnosis system 13 (connected to the battery to be analyzed). The diagnosis system 13 may comprise a physical diagnosis device 217, and a connection to an Online diagnosis service 216 which can help to obtain parameters related to battery operation of the vehicle battery.

When a battery 12 is received by an operator (such as a mechanic) which is about to use the analyzer 11 in a mechanics shop, an identification of the type and/or model of battery is performed. More precisely, it is important to identify the type of battery based on its technology (for example, lead-acid, Li-ion, polymer, Ni-MH, NiCd, etc. type of battery).

In step 201, a battery identification parameter is obtained or received. More specifically, an identification parameter may be an ID of the battery 12 provided by the manufacturer (for example, physically found in a label of the battery), which can be manually inputted within the analyzer, or sent by the diagnosis system 13 (it may be electronically obtained by the diagnosis system 13 through a connection with the controller of the battery). Also, in some cases the ID of the battery may be erased or may not be available. In such cases, an image (for example, a photograph) of the battery 12 may be useful to recognize, through image processing, the type of battery (certain shapes or physical features of the battery may be used to identify the technology used therein).

Furthermore, the analyzer 11 may be connected to a mapping repository found within a database found in data cloud 215. Such database maps a plurality of battery identification parameters already known by the system and a plurality of reference conditions (i.e., the values of reference operation parameters) of correct battery operation, each entry of the identification parameter corresponding to a plurality of vehicle batteries.

Therefore, once an identification parameter is obtained in step 201, a step 202 of verifying if the obtained identification parameter is found within the database of data cloud 215 is performed (i.e., if it is a valid identification parameter). In case of positive result, in step 203, a further check of the battery status if performed in step 205. In case of negative result, in step 204, the analyzer asks to the user, or searches in alternative ways, for a further identification parameter which may be found within the database of data cloud 215, thus performing the same obtaining (step 201) and verification (step 202 and 203) of a useful identification parameter.

Also, the analyzer may have access to a plurality of historic identification parameters, which are parameters identifying batteries which have been previously identified and/or reconditioned by the analyzer 11 (the historic identification parameters being stored in a database within the data cloud 215). Therefore, a historic identification parameter of the battery may be inputted in the analyzer in step 211, which may be used in step 201 to identify the battery as a battery previously identified and/or reconditioned by the analyzer 11. Furthermore, the historic identification parameter may also comprise the status of the battery as last seen by the analyzer. Therefore, upon input of a historic identification parameter, an updated battery status may also be obtained by the analyzer in step 212, and a verification if the historic identification parameter is found within the database of the data cloud 215 is performed in step 213. In case of positive result, no further identification may be performed, since the historic identification parameter comprises the type of battery and other related information to the specific model of the battery, and thus the process may continue in 214. In case of negative result of the verification in step 213, a new identification parameter may be searched as previously described, starting in step 201.

Upon obtaining of a valid identification parameter, and a battery status checking in step 205, a step 206 is performed of connecting the channels of the analyzer to each module to be monitorized and/or reconditioned. Said connection may be performed manually by an operator or may be performed automatically by a plug'n'play system previously installed in the battery, switching the connection of each channel to its corresponding pair of module contactors. Afterwards, a verification of the electrical operation is performed on the battery contactors in step 207, which is repeated by asking to reconnect properly in step 208 (for example, by means of a display which asks the user to connect properly the connectors and contactors), until it is a positive verification (i.e., the connectors and contactors are properly connected, and they have a proper electrical operation). Then, once the connection is verified to be positive in step 209 (and displayed as successful in the display in 210), a historic identification parameter is assigned by the system and stored in cloud data 215 in step 214 (given that there was no historic identification parameter assigned before), and the analyzer is ready to further perform the following steps of determining the reconditioning of the battery and performing the reconditioning steps themselves.

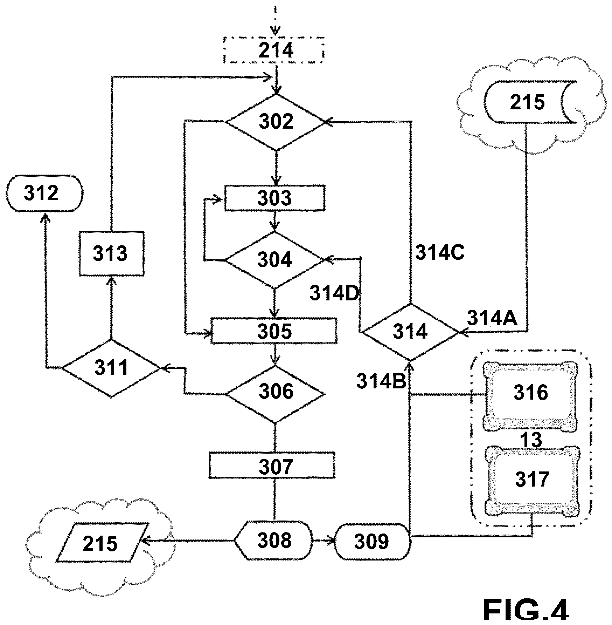

The following steps are performed as depicted in the example of the flow chart of figure 4, which shows an example of a second part of the method to determine the reconditioning process for a vehicle battery of the present disclosure, which may also be performed by the analyzer 11.

More precisely, as previously seen in figure 3, and as seen in figure 4, in step 214 the battery identification parameter is assigned and stored within the data cloud 215.

In step 314 one reference condition corresponding to the battery identification parameter is obtained from the database of the data cloud 215 through line 314A, and two parameters related to the real battery operation are obtained from the battery diagnosis system 13 through line 314B.

Furthermore, in step 314, a verification is performed of if the correlation between the values of the two received parameters related to battery operation complies with the obtained reference condition. In case that the correlation between the values of the two received parameters related to battery operation does not comply with the obtained reference condition, a further reconditioning process of the battery module is determined, thus following the chart through line 314C.

In step 302, the reconditioning process is started with a verification of if the all the battery modules are discharged to a predetermined minimum battery charge. In case of negative result, a step 303 is performed of lowering the electrical charge of all modules of the vehicle battery to the predetermined minimum battery charge value. More precisely, a verification may be performed in step 304 of if all the modules of the battery are lowered: if they aren't, step 303 may be repeated until the charge of the battery is lowered to said value. Once it is, a step 305 of charging all the battery modules to a predetermined charge value is performed. While step 305 is performed, the obtaining of at least two reconditioning parameters is also performed, the parameters being from data related to the performance of the charging of the battery to the predetermined charge value.

In order to perform such charges, the analyzer comprises a plurality of preprogrammed actions such as:
- Discharge at constant current;
- Discharge at constant power;
- Discharge at constant resistance;
- Charge at constant current;
- Charge at constant voltage;
- Charge at constant voltage and current;

Furthermore, in step 306 a determination of if the battery module is defective is performed, being based on the verification of whether the correlation between the values of the two reconditioning parameters complies with the obtained reference condition. This way, if the reconditioning parameters do not comply with the obtained reference condition, the module is determined as being a defective module and a step 311 is performed of verifying if the module can be changed or not. Therefore, if the module is defective and cannot be changed, the battery may be deemed to be dismissed in step 312. However, if it is determined that the module can be changed from the battery, a step 313 is performed of manually changing the module of the battery, and the steps of reconditioning may be performed on said module to ensure that the module works correctly (back to step 302).

If no problem is found in step 306, the modules of the battery are charged and balanced in an equal way, using a charge speed of 0.1 of nominal charge speed "C", to ensure a correct balance among all the modules of the battery. When the charge and balance are finished, the resulting data of the reconditioning (for example, a percentage of reconditioning or percentage of extended live of the battery achieved by the reconditioning) is displayed in 308, and the new battery state is stored within the data cloud 215, and the process is finished in 309.

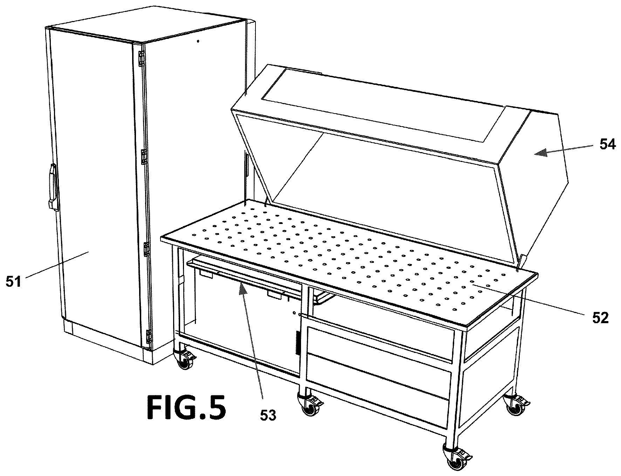

Figure 5 depicts an example of a bench comprising an analyzer 51 embedded in a rack, and a surface 52 to position the battery, enclosed with a wooden cover 54, to manipulate a battery. Once positioned in the surface 52, the battery may be connected to the analyzer 51 and a diagnosis system 53, in order to perform the method of determining the reconditioning of the battery according to an example of the present disclosure. The different steps of the method may be performed in a secure way by closing the cover 54, avoiding any electrical danger while it is being performed.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A method of determining a reconditioning process for a vehicle battery, the vehicle battery comprising at least one battery module, the method comprising:
- Receiving or obtaining a battery identification parameter value and at least two real operation parameter values from a battery diagnostics system, the battery operation parameter values being related to:
• the real operation of the vehicle battery; and/or
• the real operation of at least one battery module of the vehicle battery;
- Receiving or obtaining, from a repository, the values of reference operation parameters corresponding to the two real operation parameter values and to the battery identification parameter value;
- Obtaining the correlation between the two real operation parameter values and a correlation between the reference operation parameter values;
• If the correlation between the two real operation parameter values is outside a tolerance range of the correlation between the reference operation parameter values:
∘ Determining a reconditioning process of the vehicle battery.

2. The method according to claim 1, wherein the tolerance range is between ±10%.

3. The method according to any of claims 1 or 2, wherein the reference operation parameter values relate to the correct operation of the vehicle battery and/or a module of the vehicle battery and comprises a variation of a parameter related to the operation of the battery and/or a module of the battery over a predetermined period of time.

4. The method according to any of claims 1 or 2, wherein the reference operation parameter values relate to the correct operation of the vehicle battery and/or a module of the vehicle battery and comprises a first parameter related to the operation of the battery and/or to a module of the battery in relation to a second parameter related to the operation of the battery and/or a module of the battery.

5. The method according to any of claims 1 to 4, wherein one of the two received real operation parameters related to the operation of the battery and/or a module of the battery is a parameter related to an electrical feature of one or more battery modules.

6. The method according to claim 5, wherein the parameter related to an electrical feature of one or more battery modules is a parameter related to the voltage of a battery module, or the electrical resistance of a battery module.

7. The method according to any of claims 1 to 6, wherein one of the two received real operation parameters related to the operation of the battery and/or a module of the battery is the state of charge of the vehicle battery.

8. The method according to any of claims 1 to 7, wherein the reconditioning process of the vehicle battery comprises:
∘ Verifying the electrical operation of the vehicle battery contactors;
∘ Lowering the electrical charge of all modules of the vehicle battery to a predetermined minimum battery charge value;
∘ Charging the battery to a predetermined charge value.

9. The method according to claim 8, further comprising reconditioning the battery.

10. The method according to claim 9, wherein reconditioning the battery comprises:
- Obtaining at least two reconditioning parameters, from data related to the performance of the charging of the battery to the predetermined charge value;
- Determining at least one defective module, based on the verification of whether the correlation between the values of the two reconditioning parameters complies with the obtained reference condition.

11. The method according to any of claims 8 to 10, wherein lowering the electrical charge of all modules of the battery comprises storing at least part of the electrical charge extracted from the modules of the battery in an electrical accumulator device.

12. The method according to claim 11, wherein charging the battery to a predetermined charge value is performed using the charge stored within the electrical accumulator device.

13. System for determining the reconditioning process for a vehicle battery, the system comprising:
- A repository storing battery identification parameters related to the values of reference operation parameters according to the correct battery operation of a plurality of vehicle batteries;
- A controller configured to:
• Receive or obtain a battery identification parameter value and at least two real operation parameter values from a battery diagnostics system, the battery operation parameter values being related to:
∘ the real operation of the vehicle battery; and/or
∘ the real operation of at least one battery module of the vehicle battery;
• Receive or obtain, from a repository, the values of reference operation parameters corresponding to the two real operation parameter values and to the battery identification parameter value;
• Obtain the correlation between the two real operation parameter values and a correlation between the reference operation parameter values;
• If the correlation between the two real operation parameter values are outside a tolerance range of the correlation between the reference operation parameter values:
∘ Determine a reconditioning process of the vehicle battery.
